# EUROPÄISCHE PATENTSCHRIFT

(11) **EP 1 303 431 B1**
(45) Veröffentlichungstag und Bekanntmachung des Hinweises auf die Patenterteilung: **10.05.2006**
(21) Anmeldenummer: 01947136.6
(22) Anmeldetag: 11.05.2001
(51) Int. Cl.: B60S 1/38

(54) **VERFAHREN ZUM HERSTELLEN EINES WISCHLEISTEN-TRAGELEMENTS FÜR FAHRZEUGSCHEIBENWISCHER**
METHOD FOR PRODUCING A WIPER-STRIP SUPPORT ELEMENT FOR VEHICLE WINDSCREEN WIPERS
PROCEDE POUR FABRIQUER UN ELEMENT SUPPORT POUR LAME DE BALAI D'ESSUIE-GLACE DE VEHICULE

(30) Priorität: 13.07.2000 DE 10034091
(43) Veröffentlichungstag der Anmeldung: 23.04.2003
(73) Patentinhaber: ROBERT BOSCH GMBH, 70442 Stuttgart (DE)
(72) Erfinder: MAZURKIEWICZ, Julius, B-3290 Diest (BE); CRIEL, Paul, B-3800 St. Truiden (BE); DE BLOCK, Peter, B-3545 Halen (BE); WIJNANTS, Peter, B-3111 Wezemaal (BE)
(86) Internationale Anmeldenummer: PCT/DE2001/001802
(87) Internationale Veröffentlichungsnummer: WO 2002/006099

(56) Entgegenhaltungen:
- DE-A- 19 802 451
- PATENT ABSTRACTS OF JAPAN vol. 1998, no. 03, 27. Februar 1998 (1998-02-27) & JP 09 285834 A (ICHIKOH IND LTD;KURIA KIKI:KK; SHOWA SEIKO KK), 4. November 1997 (1997-11-04)

## Beschreibung

### Stand-der Technik

Ein dem hier in Rede stehenden Tragelement ähnliches Tragelement umfaßt Längsschienen, die über Brückenstege verbunden sind und ist beispielsweise aus der DE-OS 100 25 708 bekannt. Die Herstellung eines solchen Tragelements geschieht üblicherweise so, dass nach dem Zurichten der Federschienen und der Brückenstege diese Brückenstege mit den Federschienen verschweißt werden. Danach werden die so gebildeten, rohen einzelnen Tragelemente weiteren Verfahrensschritten unterzogen. Diese weiteren Verfahrensschritte können darin bestehen, dass die in dem rohen Tragelementen möglicherweise vorhandenen Spannungen durch eine Wärmebehandlung aufgehoben werden und dass danach die rohen Tragelemente einer vorgeschriebenen Oberflächenbehandlung unterworfen werden, die zum Beispiel im Entrosten, Verzinken, Lackieren etc. der Rohlinge bestehen kann. Dazu müssen die in Transportbehälter liegenden Tragelemente dort entnommen, jeweils in eine vorbestimmte Behandlungsposition gebracht und danach dem entsprechenden, die gewünschte Behandlung ausführenden Aggregat zugeführt werden. Ein solches Verfahren zum Herstellen von Tragelementen erfordert immer wieder nur manuell ausführbare und damit kostenintensive Zwischenschritte.

### Vorteile der Erfindung

Bei dem erfindungsgemäßen Herstellungsverfahren mit den kennzeichnenden Merkmalen des Anspruchs 1 werden die Tragelemente durch das Halteelement in einem matten- oder rostartigen Verbund sicher gehalten, so dass sich eine besonders einfache Weiterbehandlung der Tragelemente ergibt, bei der keine manuellen Arbeiten wie zum Beispiel das Lösen der miteinander in den Transportbehältern verhakten Tragelementen und deren entsprechende Ausrichtung vor jedem weiteren Verfahrensschritt mehr nötig sind.

Besonders vorteilhaft ist es, wenn zur Stabilisierung des Verbunds an jedem der beiden Federschienenabschnitte der Federschienenpaare ein bandartiges Haltelement befestigt wird.

Eine weitere Vereinfachung des erfindungsgemäßen Herstellungsverfahrens für ein Tragelement, bei dem die Querstege den Abstand zwischen denen zusammengehörigen Federschienen bogen- oder brückenartig überqueren ergibt sich, wenn die beiden bandartigen Halteelemente mit auf die Abstände zwischen den zusammengehörigen Federschienenpaare abgestimmte Ausformungen versehen werden, welche sich brückenartig von der einen zu der anderen Federschiene eines Paares erstrecken.

Im Verbund können eine Vielzahl von Tragelementen auf einfache Weise beispielsweise einer Wärmebehandlung zum Eliminieren von in den Tragelementen vorhandenen Spannungen unterzogen werden. Weiter ist im rostartigen Verbund auch eine Entrostung des Verbunds; eine Rostschutzbehandlung, zum. Beispiel Verzinken inklusive Beschichtungen wie zu ZnAl, ZnNi, ZnFe und/oder auch eine Lackierung der Tragelemente möglich.

Auch bietet sich im Verbund die Befestigung der wischblattseitigen Hälfte einer Vorrichtung zum Verbinden des Wischblatts mit einem Wischerarm an, weil alle Tragelemente ohne weiteren Aufwand in einer klar definierten Position einer dafür zuständigen Montagestation zugeführt werden können.

Die Trennung der einzelnen Tragelemente vom Verbund erfolgt vorteilhaft entlang den äußeren Längskanten seiner beiden Federschienen. Dadurch wird der Abfall auf ein Minimum begrenzt. Die dabei entstehenden kleinen rohen Schnittkanten sind beim verzinkten Tragelement durch Fernwirkung ebenfalls gegen Korrosion geschützt.

Damit eine vorschriftsmäßige Verteilung des Wischleisten-Anpreßdrucks an der zu wischenden Scheibe sichergestellt wird, werden die Federschienen in ihre Längsrichtung mit einer Krümmung versehen, an deren äußeren, von der Scheibe abgewandten Seite das bandartige Haltelement befestigt wird.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

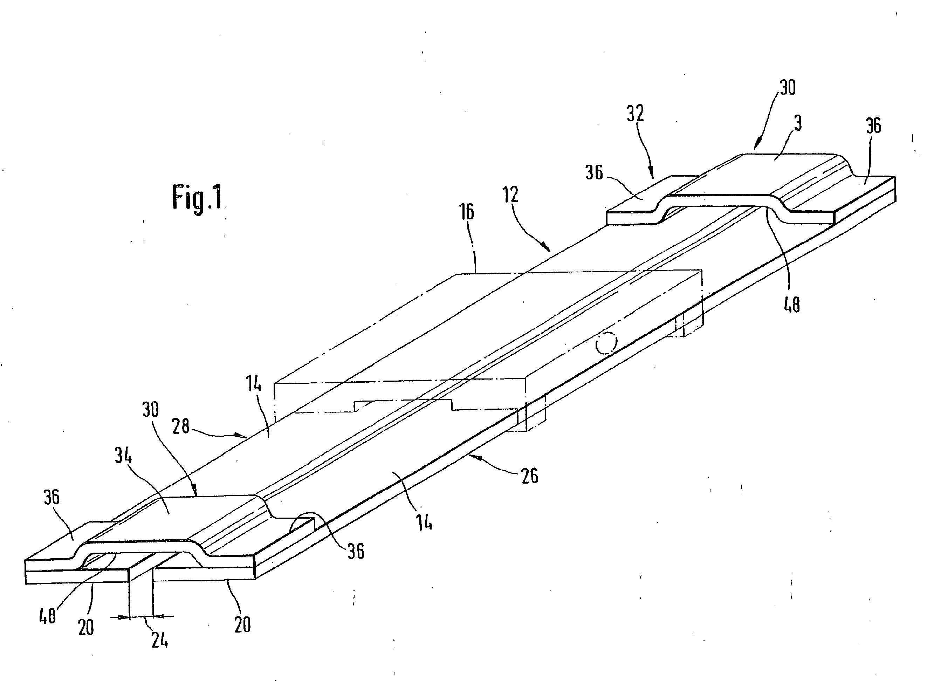

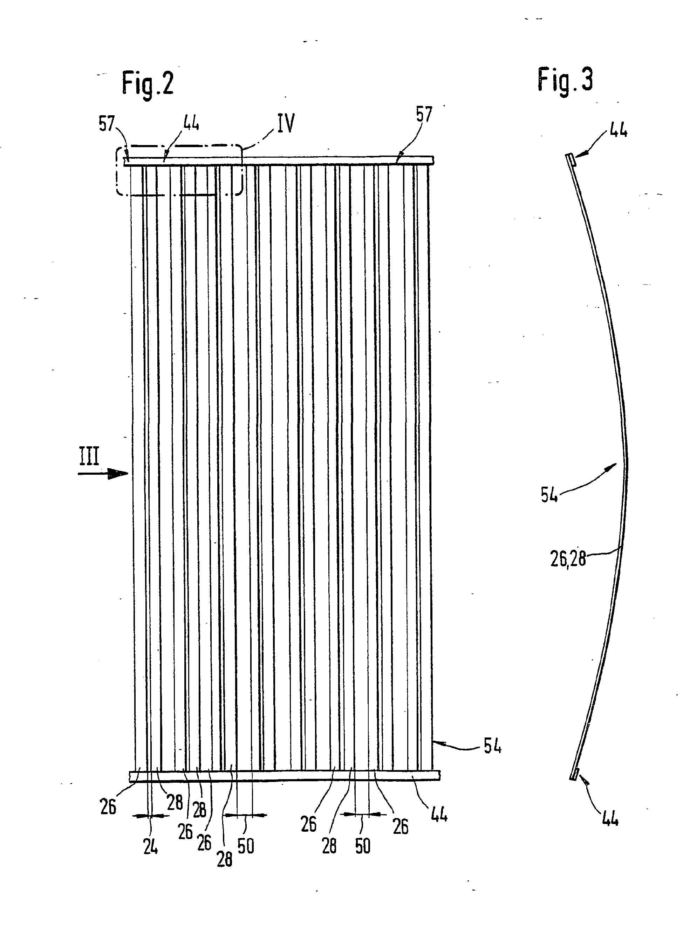

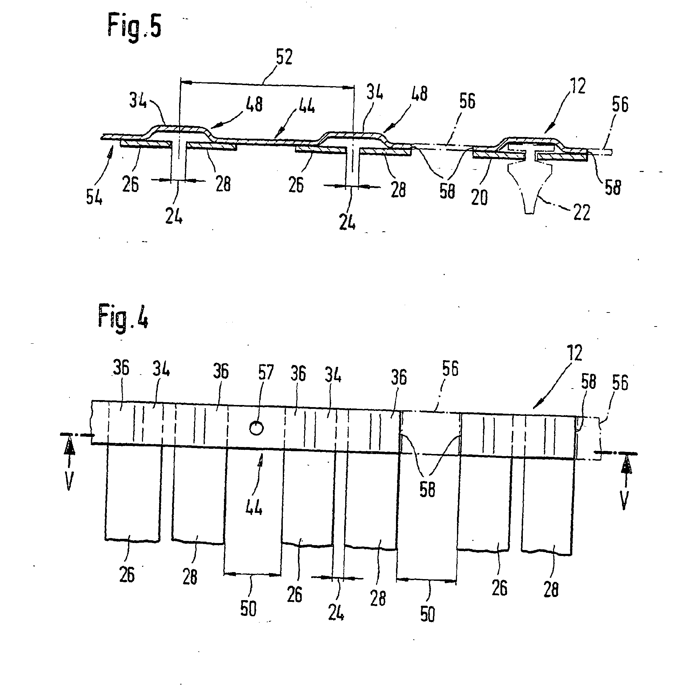

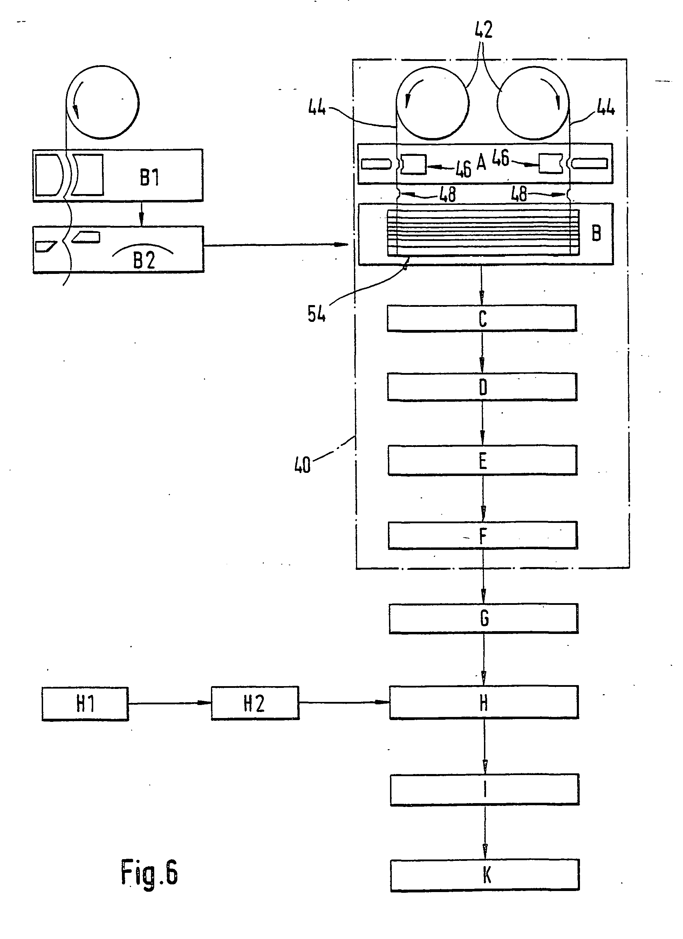

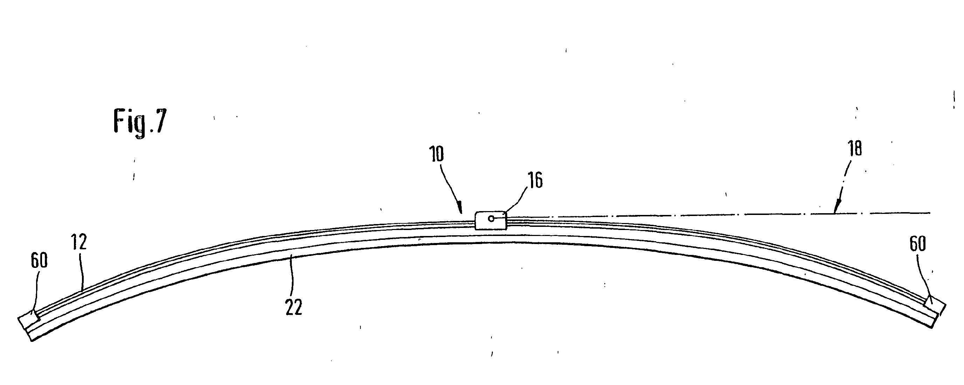

In der Zeichnung zeigen: Figur 1 ein mit dem erfindungsgemäßen Verfahren hergestelltes Tragelement in unmaßstäblicher, perspektivischer Darstellung, Figur 2 eine Draufsicht auf mehrere.Tragelemente gemäß Figur 1 in verkleinerter Darstellung, die gemäß der Erfindung durch Halteelemente miteinander fest verbunden sind, Figur 3 die Anordnung gemäß Figur 2 in Richtung des Pfeiles III in Fig. 2 gesehen, Figur 4 eine in Figur 2 mit IV bezeichnete Einzelheit in vergrößerter Darstellung, Figur 5 einen Schnitt durch die Anordnung gemäß Figur 4 entlang der Linie IV-IV, Figur 6 eine schematische Gliederung der einzelnen Verfahrensschritte die zu dem erfindungsgemäßen Verfahren gehören und Figur 7 eine unmaßstäbliche Seitenansicht eines mit dem Tragelement gemäß Figur 1 versehenen Wischblatts für Scheiben von Kraftfahrzeugen.

### Beschreibung des Ausführungsbeispiels

Ein in Figur 7 dargestelltes Wischblatt 10 weist ein in Längsrichtung gekrümmtes langgestrecktes, federelastisches Tragelement 12 auf (Fig. 3 und 7), das in Figur 1 separat, unmaßstäblich und gestreckt dargestellt ist. An der von der zu wischenden Scheibe abgewandten Oberseite 14 - dies ist die Außenweite der Tragelement-Krümmung - des Tragelements 12 ist das Prinzip der wischblattseitigen Hälfte 16 einer Anschlußvorrichtung strichpunktiert eingezeichnet, mit deren Hilfe das Wischblatt 10 mit einem an der Karosserie eines Kraftfahrzeuges geführten, angetriebenen Wischerarm 18 lösbar verbunden werden kann. An der der Scheibe zugewandten Unterseite 20- dies ist die Innenseite der Tragelementkrümmung - ist eine langgestreckte, gummielastische Wischleiste 22 längsachsenparallel angeordnet (Figuren 1 und 5). Wie insbesondere aus Figur 1 ersichtlich ist, hat das Tragelement 12 zwei mit einem Abstand 24 von einander und parallel zueinander ausgerichtete Federschienen 26 und 28. Die beiden Federschienen 26 und 28 sind an ihren beiden Endabschnitten durch an ihrer Oberseite 14 angeordnete Querstege 30 und 32 miteinander verbunden. Die Querstege 30 und 32 haben eine brückenartige Gestalt, so dass sie den Abstand 24 zwischen den beiden Federschienen 26 und 28 mit ihrem Mittelabschnitt 34 erhöht überqueren. Die Querstege 30 und 32 liegen mit ihren Endabschnitten 36 auf den Oberseiten 14 der Federschienen 26, 28 beziehungsweise an der Oberseite des Tragelements 12 auf und sind in dieser Position fest mit den Federschienen verbunden. Dies kann beispielsweise durch ein an sich bekanntes Schweißverfahren geschehen.

Ein besonders vorteilhaftes Verfahren zum Herstellen eines solchen Tragelements 12 soll im folgenden anhand der Figuren 2, 4, 5 und 6 näher erläutert werden. In Figur 6 ist ein Beispiel eines derartigen, erfindungsgemäßen Verfahrens zur Herstellung des Tragelements innerhalb eines Schemas von Fertigungsschritten zur Herstellung des Wischblatts 10 gemäß Figur 7 durch eine strichpunktierte Linie 40 eingerahmt. Die Verfahrensschritte zur Herstellung des Tragelements 12 sind dort mit den Buchstaben A, B, C, D, E und F bezeichnet. Als Vorstufe zum erfindungsgemäßen Verfahren werden zunächst die Federschienen in einem vorgeordneten Verfahrensschritt B1 gebogen und danach in einem nächsten Verfahrensschritt B2 abgelängt, so dass sich einzelne Federschienen 26, 28 ergeben.

Gemäß dem erfindungsgemäßen Verfahren werden von zwei Bandmaterialrollen 42 Bandstreifen 44 abgerollt und Prägestationen 46 zugeführt. Dort werden hintereinander in vorbestimmten Abständen Ausformungen 48 Bandstreifen 44 eingebracht (Verfahrensschritt A), wonach die so ausgeformten Bandstreifen 44 einer Schweißstation zugeführt werden. Dort sind eine Vielzahl von Federschienen 26, 28 vorschriftsmäßig aufgereiht. Sie befinden sich dort zueinander parallel ausgerichtet und mit bestimmten Abständen voneinander (Fig. 4). Die zu einem gemeinsamen Paar gehörenden Federschienen 26 und 28 liegen im Abstand 24 voneinander. Der Abstand 50 zwischen den einzelnen Federschienenpaaren (Figur 4) ist auf ein Minimum begrenzt, welches sich aus den Erfordernissen der weiteren Verfahrensschritte ergibt. Die sich so ergebende Teilung 52 (Fig. 5) von-einem Federschienenpaar zum nächsten Federschienenpaar findet sich wieder bei der Teilung der Ausformungen 48 in den Bandstreifen 44. Weiter ist noch von Bedeutung, dass die Ausformungen 48 in den beiden Bandstreifen 44 quer zur Längserstreckung der Bandstreifen gesehen miteinander fluchten. Wenn nun während des Abrollens der Bandstreifen 44 in ihren Bandmaterialrollen 42 in ihren Ausformungen 48 bezüglich der Federschienenpaare 26, 28 in die in Figur 5 dargestellte Position gelangen, werden die Federschienen 26, 28 an ihren beiden Endabschnitten fest mit den Bandstreifen 44 verbunden. Dieser Verfahrensschritt kann beispielsweise durch ein an sich bekanntes Schweißverfahren erreicht werden (Verfahrensschritt B). Mit dem Verfahrensschritt B werden somit die vorgefertigten Federschienen 26, 28 mehrerer Tragelemente 12 paarweise und parallel zueinander ausgerichtet mit den beiden Bandstreifen 44 fest verbunden, welche quer zu den Federschienen ausgerichtet und bandartig ausgebildet sind. Durch die als Haltelemente dienenden Baustreifen 44 ergibt sich somit ein matten- oder rostartiger Verbund 54, welcher wegen der gekrümmten Federschienen 26, 28 von rinnenartiger Gestaltist, der auf einfache Weise weiteren Verfahrensschritten zugeführt werden kann. Aufgrund der vorhergehenden Verfahrensschritte ist es möglich, daß in den Federschienen 26, 28 Spannungen vorhanden sind, welche die Qualität der Wischarbeit eines Scheibenwischers beeinträchtigen. Deshalb kann es zweckmäßig sein, wenn der rostartige Verbund 54 (Figuren 2 und 6) einer Wärmebehandlung zum Eliminieren dieser Spannungen unterzogen wird (Verfahrensschritt C). Um das Tragelement 12 gegen aggressive Umwelteinflüsse zu schützen ist es zweckmäßig, wenn der rostartige Verbund gemäß einem weiteren Verfahrensschritt (D) verzinkt wird.

Bei der Verwendung von einem vorverzinkten Band für die Haltelemente 44 kann dort in einem Zwischenschritt - vor dem Verfahrensschritt B - die Zinkauflage auf geeignete Weise partiell entfernt werden. Danach wird gemäß dem Ausführungsbeispiel der Verband 54 in einem weiteren Verfahrensschritt E lackiert.

Schließlich gelangt der Verbund in eine Trennstation, wo die Vereinzelung der im Verbund 54 befindlichen Tragelemente 12 erfolgt. Dabei werden die beiden als Halteelement wirkenden Bandstreifen 44 entlang den äußeren Längskanten seiner beiden Federschienen aus dem Verbund herausgetrennt. Es ergibt sich somit ein Abfallstück, das in den Figuren 4 und 5 mit der Bezugszahl 56 versehen ist.

Beim Trennen der Tragelemente 12 aus dem Verbund 54 ergeben sich zwar kleine, rohe Schnittkanten 58 (Fig. 4 und 5), doch bieten diese keine Angriffsstellen für Umwelteinflüsse, weil sie - bei verzinkten Tragelementen - durch die sogenannte Fernwirkung geschützt sind.

Die Länge eines Verbunds 54 bestimmt sich durch die Größe der Arbeitsstationen, in welchen die Verfahrensschritte C, D, E und F ausgeführt werden. Es ist jedoch durchaus denkbar, dass die Verfahrensschritte A bis F stetig ausgeführt werden; das heißt, dass dieser Verbund sozusagen "endlos" ist, weil mit dem Abschneiden des letzten Tragelements 12 des Verbunds diesem gleichzeitig ein neues erstes Federschienenpaar hinzugefügt wird.

Zum Überführen des rostartigen Verbunds 54 von einer Behandlungsstation zur nächsten Behandlungsstation ist es vorteilhaft, wen in den Bandstreifen 44 - vorzugsweise im Bereich der späteren Abfallstücke 56 Durchbrechungen 57 angebracht sind.

Unabhängig von dem erfindungsgemäßen Verfahren mit den Verfahrensschritten A bis F ist es denkbar, dass an den zusammengehörigen Federschienenpaaren 26, 28 des Verbunds 54 eine wischblattseitige Hälfte 16 einer Vorrichtung zum Verbinden des Wischblatts 10 mit einem Wischerarm 18 befestigt wird. Ein solcher Montagevorgang der in Figur mit dem Verfahrensschritt G bezeichnet ist, kann beispielsweise zwischen den Verfahrensschritten B und C beziehungsweise zwischen den Verfahrensschritten C und D beziehungsweise zwischen den Verfahrensschritten D und E beziehungsweise zwischen den Verfahrensschritten E und F gefügt werden. Auf diese Weise ist es möglich, eine separate Oberflächenbehandlung der Vorrichtungshälfte 16 einzusparen.

Ungeachtet dessen umfaßt das Tragelement 12 generell zwei zueinander parallel angeordnete Federschienen 26, 28 und wenigstens zwei diese Federschienen verbindende quer zu diesen ausgerichtete und an den beiden Endabschnitten befindliche Quer- oder Brückenstege 30, 32. Bei besonders langen Wischblättern können deren Tragelemente durchaus mit weiteren mit Abstand voneinander plazierten Zwischen-Brückenstegen ausgestattet werden. Das Tragelement soll insbesondere den vom Wischerarm aus auf das Wischblatt einwirkenden Auflagedruck an der zu wischenden Scheibe ordnungsgemäß über die gesamte Wischblattlänge verteilen und die Wischleiste spannungsfrei zwischen seinen beiden Federschienen führen. Dies wird durch die Anordnung der beiden auf den jeweiligen Anwendungsfall bezogen entsprechend vorgebogenen Federschienen und durch den mittels der Brückenstege fixierten Abstand zwischen den beiden Federschienen erreicht. Die im Mittelabschnitt des Tragelements 12 an diesem befestigte, wischblattseitige Hälfte 16 einer Vorrichtung zum Verbinden des Wischblatts mit einem angetriebenen Wischerarm 18 mag zwar - wie die beiden Brückenstege 30, 32 - ebenfalls zur Stabilisierung des Wischblatts in dessen Wischrichtung beitragen, doch beeinflusst diese Hälfte nicht die an das Tragelement gestellten Anforderungen hinsichtlich Auflagedruckverteilung und Wischleistenführung. Deshalb kann deren Montagezeitpunkt bei der Festlegung der zeitlichen Abfolge der zum erfindungsgemäßen Herstellungsverfahren gehörenden Verfahrensschritte auch außer Betracht bleiben. Eine Montage der Vorrichtungshälfte 16 am Tragelement 12 beziehungsweise an dessen Einzelelementen - als Zwischenschritt beispielsweise zwischen den Verfahrensschritten B und C beziehungsweise C und D beziehungsweise D und E beziehungsweise E und F - verändert nicht das erfindungsgemäße Verfahren zum Herstellen eines vorteilhaften Tragelements auf besonders wirtschaftliche Weise. Das erfindungsgemäße Herstellungsverfahren kennzeichnet sich alleine dadurch, dass die vorgefertigten Federschienen 26, 28 mehrerer Tragelemente 12 paarweise und parallel zueinander ausgerichtet mittels zumindest eines quer zu den Federschienen ausgerichteten bandartigen Halteelements 44 fest miteinander verbunden werden und dass der so erhaltene rostartige Verbund 54 wenigstens einem weiteren Verfahrensschritt unterzogen wird, wonach durch Trennen des Halteelements zwischen den jeweiligen Federschienenpaaren die Tragelemente 12 aus dem Verbund 54 gelöst werden.

Danach kann die Montage des Wischblatts erfolgen, die gemäß der schematischen Gliederung nach Fig. 6 weitere Montageschritte umfassen kann:
- G: Ggf. Befestigen der wischblattseitigen Hälfte 16 der besagten Anschußrichtung,
- H: Einziehen der gummielastischen Wischleiste 22 (Fig. 5) in das Tragelement 12, die ihrerseits beispielsweise im Extrusionsverfahren hergestellt und danach auf Länge geschnitten, graphitiert, etc. (H2) wird.
- I: Sichern der Wischleiste 22 im Tragelement 12 gegen Längsverschiebung und
- K: Anbringen von Schutzabdeckungen 60 an den Wischblattenden.

Eine erfindungsgemäße Vorrichtung zur Durchführung des vorbeschriebenen Verfahrens oder der Varianten zum Verfahren umfaßt im wesentlichen die in Figur 6 dargestellten und in der Beschreibung aufgezeigten Vorrichtungskomponenten.

## Patentansprüche

1. Verfahren zum Herstellen eines bandartig langgestreckten, federelastischen Elements (12) zum Tragen einer gummielastischen Wischleiste (22) eines Scheibenwischers für Fahrzeuge, das zwei mit Abstand (24) voneinander und im wesentlichen parallel zueinander befindliche Federschienen (26, 28) hat, die zumindest an ihren beiden Endabschnitten durch an der einen Bandfläche (14) der Federschienen angeordnete, den Abstand (24) überbrückende Querstege (30) fest miteinander verbunden sind, **dadurch gekennzeichnet, dass** die vorgefertigten Federschienen (26, 28) mehrerer Tragelemente (12) paarweise und im wesentlichen parallel zueinander ausgerichtet, mittels zumindest eines quer zu den Federschienen ausgerichteten, bandartigen Halteelements (44) fest miteinander verbunden werden, dass der so erhaltene rostartige Verbund (54) wenigstens einem weiteren Verfahrensschritt unterzogen wird, wonach durch Trennen des Halteelements (44) zwischen den jeweiligen Federschienenpaaren (26, 28) die Tragelemente (12) aus dem Verbund (54) gelöst werden.

2. Verfahren nach Anspruch 1, **dadurch gekennzeichnet, dass** an jedem der beiden Federschienenendabschnitte der Federschienenpaare (26, 28) ein bandartiges Halteelement (44) befestigt wird.

3. Verfahren nach Anspruch 2, **dadurch gekennzeichnet, dass** die beiden bandartigen Halteelemente (44) mit auf die Abstände (50) zwischen den zusammengehörigen Federschienenpaare (26, 28) abgestimmte Ausformungen (48) versehen werden, welche sich brückenartig von der einen (26, 28) zur anderen Federschiene (26, 28) eines Paares erstrecken.

4. Verfahren nach einem der Ansprüche 1 bis 3, **dadurch gekennzeichnet, dass** der rostartige Verbund (54) einer Wärmebehandlung unterzogen wird.

5. Verfahren nach Anspruch 4, **dadurch gekennzeichnet, dass** der rostartige Verbund (54) verzinkt oder mit einer zinkhaltigen Beschichtung versehen wird.

6. Verfahren nach einem der Ansprüche 4 oder 5, **dadurch gekennzeichnet, dass** der rostartige Verbund (54) lackiert wird.

7. Verfahren nach einem der Ansprüche 1 bis.6, **dadurch gekennzeichnet, dass** an den zusammengehörigen Federschienenpaaren (26, 28) eine wischblattseitige Hälfte (16) einer Vorrichtung zum Verbinden des Wischblatts mit einem Wischerarm (18) befestigt wird.

8. Verfahren nach einem der Ansprüche 1 bis 7, **dadurch gekennzeichnet, dass** das Halteelement entlang den äußeren Längskanten bei beiden Federschienen (26, 28) aus dem Verbund (54) herausgetrennt wird.

9. Verfahren nach einem der Ansprüche 1 bis 8, **dadurch gekennzeichnet, dass** die Federschienen (26, 28) in ihrer Längserstreckung mit einer Krümmung versehen werden, an deren äußeren Seite das bandartige Halteelement (44) befestigt wird.

## Claims

1. Method of producing a strip-like, elongated springy element (12) for supporting a resilient wiper strip (22) of a windscreen wiper for vehicles, which has two spring rails (26, 28) that are located at a distance (24) from each other and substantially parallel to each other and which, at least at their two end sections, are firmly connected to each other by means of transverse webs (30) which are arranged on one strip surface (14) of the spring rails and bridge across the distance (24), **characterized in that** the prefabricated spring rails (26, 28) of a plurality of supporting elements (12) are firmly connected to one another in pairs and aligned substantially parallel to one another by means of at least one strip-like retaining element (44) which is aligned transversely with respect to the spring rails, **in that** the grid-like composite (54) obtained in this way is subjected to at least one further method step, after which, by separating the retaining element (44) between the respective pairs of spring rails (26, 28), the supporting elements (12) are detached from the composite (54).

2. Method according to Claim 1, **characterized in that** a strip-like retaining element (44) is fixed to each of the two spring-rail end sections of the pairs of spring rails (26, 28).

3. Method according to Claim 2, **characterized in that** the two strip-like retaining elements (44) are provided with moulded sections (48) that are matched to the distances (50) between the associated pairs of spring rails (26, 28) and which extend like bridges from one (26, 28) to the other spring rail (26, 28) of a pair.

4. Method according to one of Claims 1 to 3, **characterized in that** the grid-like composite (54) is subjected to heat treatment.

5. Method according to Claim 4, **characterized in that** the grid-like composite (54) is galvanized or provided with a coating containing zinc.

6. Method according to one of Claims 4 or 5, **characterized in that** the grid-like composite (54) is painted.

7. Method according to one of Claims 1 to 6, **characterized in that** a wiper-blade-side half (16) of a device for connecting the wiper blade to a wiper arm (18) is fixed to the associated pairs of spring rails (26, 28).

8. Method according to one of Claims 1 to 7, **characterized in that** the retaining element is separated out from the composite (54) along the outer longitudinal edges of both spring rails (26, 28).

9. Method according to one of Claims 1 to 8, **characterized in that** the spring rails (26, 28) are provided in their longitudinal extent with a curvature on whose outer side the strip-like retaining element (44) is fixed.

## Revendications

1. Procédé de fabrication d'un élément (12) en forme de ruban allongé ayant l'élasticité d'un ressort pour porter une lame d'essuyage (22) ayant l'élasticité du caoutchouc d'un balai d'essuie-glace de véhicule, comportant deux rails élastiques (26, 28) écartés d'une distance (24) l'une de l'autre et dans des positions essentiellement parallèles, ces rails étant réunis au moins à leurs deux segments d'extrémité par une traverse (30) prévue sur la surface de ruban (14) des rails élastiques et chevauchant l'intervalle (24) pour être reliée solidairement,
**caractérisé en ce qu'**
on aligne les rails élastiques (26, 28) préfabriqués de plusieurs éléments de support (12) par paires, de manière essentiellement parallèle, à l'aide d'au moins un élément de fixation (44) dirigé transversalement aux rails élastiques et ayant la forme d'un ruban afin de les relier rigidement et la combinaison (54) en forme de grille ainsi obtenue est soumise à au moins une autre opération et on détache les éléments de support (12) de la combinaison (54) par séparation de l'élément de fixation (44) entre les paires de rails élastiques respectives (26, 28).

2. Procédé selon la revendication 1,
**caractérisé en ce qu'**
on fixe un élément de fixation (44) en forme de ruban à chacun des deux segments d'extrémité des paires de rails (26, 28).

3. Procédé selon la revendication 2,
**caractérisé en ce que**
les deux éléments de fixation (44) en forme de ruban comportent des déformations (48) correspondant aux intervalles (50) entre les paires de rails élastiques (26, 28), ces déformations en forme de voûte passant d'un rail élastique (26, 28) à l'autre rail élastique (26, 28) d'une paire.

4. Procédé selon l'une des revendications 1 à 3,
**caractérisé en ce qu'**
on soumet la combinaison (54) en forme de grille à un traitement thermique.

5. Procédé selon la revendication 4,
**caractérisé en ce qu'**
on zingue ou on revêt d'un revêtement contenant du zinc la combinaison (54) en forme de grille.

6. Procédé selon l'une des revendications 4 ou 5,
**caractérisé en ce qu'**
on vernit la combinaison (54) en forme de grille.

7. Procédé selon l'une des revendications 1 à 6,
**caractérisé en ce qu'**
on fixe sur la paire de rails élastiques correspondants (26, 28), une moitié (16) côté balai d'essuie-glace d'un dispositif de liaison du balai d'essuie-glace à un bras d'essuie-glace (18).

8. Procédé selon l'une des revendications 1 à 7,
**caractérisé en ce qu'**
on sépare l'élément de fixation suivant les arêtes longitudinales extérieures des deux rails élastiques (26, 28) pour le dégager de la combinaison (54).

9. Procédé selon l'une des revendications 1 à 8,
**caractérisé en ce qu'**
on donne aux rails élastiques (26, 28) un cintrage dans leur direction longitudinale et on fixe l'élément de fixation (44) en forme de ruban sur le côté extérieur des rails.
